# EUROPÄISCHE PATENTSCHRIFT

(11) **EP 1 897 393 B1**
(45) Veröffentlichungstag und Bekanntmachung des Hinweises auf die Patenterteilung: **25.11.2009**
(21) Anmeldenummer: 06763683.7
(22) Anmeldetag: 13.06.2006
(51) Int. Cl.: H04W 48/18

(54) **VERFAHREN UND MOBILES KOMMUNIKATIONSGERÄT ZUR AUSWAHL EINES ÜBERTRAGUNGSWEGES**
METHOD AND MOBILE COMMUNICATION DEVICE FOR SELECTING A TRANSMISSION PATH
PROCEDE ET APPAREIL DE COMMUNICATION MOBILE POUR SELECTIONNER UNE VOIE DE TRANSMISSION

(30) Priorität: 29.06.2005 DE 102005030796
(43) Veröffentlichungstag der Anmeldung: 12.03.2008
(73) Patentinhaber: SIEMENS AKTIENGESELLSCHAFT, 80333 München (DE)
(72) Erfinder: LUERS, Jürgen, 33178 Borchen (DE)
(74) Vertreter: Fritzsche, Thomas
(86) Internationale Anmeldenummer: PCT/EP2006/063162
(87) Internationale Veröffentlichungsnummer: WO 2007/000391

(56) Entgegenhaltungen:
- EP-A- 1 610 576
- US-A- 5 752 164
- US-A- 5 974 328
- US-A1- 2002 082 044
- US-A1- 2002 168 976
- US-A1- 2004 242 240

## Beschreibung

Die Erfindung betrifft ein Verfahren für ein mobiles Kommunikationsgerät gemäß des Oberbegriffs des Patentanspruchs 1, und ein Kommunikationsendgerät zum drahtlosen Zugriff auf mehrere Übertragungswege gemäß des Oberbegriffs des Patentanspruchs 10.

Für mobile Kommunikationsverbindungen stehen häufig verschiedene funkbasierte Sprach-Netzwerke und Daten-Netzwerke zur Verfügung. Dabei können die funkbasierten Sprach-Netzwerke, also beispielsweise GSM-Netze, DECT-Netze und UMTS-Netze, auch zur Datenübertragung genutzt werden, wie auch umgekehrt funkbasierte Datennetze, also beispielsweise WLAN-Netze, WiMax-Netze und Bluetooth-Netzwerke, auch zur Sprachübertragung (z.B. VoIP = Voice over Internet Protocol) verwendet werden können.

Während also in vielen Fällen dieselbe Anforderung (Sprachübertragung, Datenübertragung.etc.) in gleicher oder ähnlicher Qualität über unterschiedliche Typen von mobilen Netzwerken und somit mittels unterschiedlicher Übertragungswege erfüllt werden kann, unterscheiden sich diese Übertragungswege jedoch hinsichtlich der mit ihrer Nutzung jeweils verbundenen Kosten, hinsichtlich ihrer Bandbreite, den Verzögerungszeiten, der Zuverlässigkeit (Verbindungsabbrüche) etc..

Um je nach Bedarf in einer speziellen Situation zwischen unterschiedlichen Übertragungswegen und den damit jeweils verbundenen Vor- und Nachteilen zugreifen zu können, werden häufig sog. multi-modale mobile Kommunikationsgeräte eingesetzt. Das sind beispielsweise PCs, die sowohl über Bluetooth- als auch über WLAN-Übertragungseinrichtungen verfügen, oder auch Mobilfunkgeräte (Telefone), die wahlweise Verbindungen nach dem GSM-Standard, dem UMTS-Standard und/oder dem DECT-Standard unterstützen. Ein Benutzer eines solchen Kommunikationsgerätes kann also vor dem Aufbau einer Kommunikationsverbindung, beispielsweise eines Telefongespräches, auswählen, über welchen Übertragungsweg die nächste Kommunikationsverbindung erfolgen soll. Alternativ ist es auch möglich, für unterschiedliche Kommunikationsdienste (Vöice, Fax, SMS, Internet-WWW, etc.) unterschiedliche Übertragungswege (GSM, GPRS, DECT) fest vor-einzustellen.

Häufig wird die Auswahl eines Übertragungsweges auch automatisch von den Kommunikationsgeräten vorgenommen, indem zum Zeitpunkt der Initiierung einer Kommunikationsverbindung die Verfügbarkeit der verschiedenen Übertragungswege geprüft wird. Dazu wird beispielsweise mittels einer Feldstärkemessung geprüft, ob die verschiedenen Basisstationen der unterschiedlichen Übertragungswege (beispielsweise DECT, WLAN) empfangbar sind. Anhand einer Prioritätsliste wird dann beispielsweise bei Verfügbarkeit das (kostengünstige) WLAN-Netz ausgewählt, wogegen bei Nicht-Verfügbarkeit eines WLAN-Netzes oder einer DECT-Zelle eine GSM-Mobilfunkverbindung als Übertragungsweg ausgewählt wird.

Aus der Druckschrift US 2004/0242240 A1 Lin "Location Assisted Communications Mode Switching" ist ein Verfahren bekannt, bei dem multi-modale Endgeräte in Abhängigkeit ihrer geografischen Position aus einer Tabelle einen bevorzugten Kommunikations-Modus auslesen und, sofern sich das Endgerät in einem anderen Kommunikations-Modus befindet, zu diesem ausgewählten Kommunikations-Modus wechseln. Dieser Vorgang wird in regelmäßigen Zeitabständen wiederholt.

Aus der Druckschrift US 5,752,164 Jones "Autonomous Remote Measurement Unit for Personal Communications Service System" ist ein Verfahren für ein Kommunikationsnetzwerk bekannt, bei welchem wechselweise verschiedene Frequenz-Kanäle eines breiten Frequenzbandes für eine Kommunikation genutzt werden können. Das Einsatzgebiet des Kommunikationssystems wird dabei in eine Anzahl wabenförmiger Bereiche eingeteilt, wobei für jeden Bereich Störungen bzw. Belegungen der einzelnen Funkkanäle mittels in jeder Wabe vorgesehener Messeinrichtungen gemessen und in einer zentralen Datenbank abgelegt werden. Diese Messungen werden bevorzugt wiederholt durchgeführt und zur Pflege der damit gebildeten Datenbank verwendet. Beim Einsatz eines mobilen Endgerätes wird eine Positionsbestimmung dieses Endgerätes vorgenommen und anhand eines Zugriffes auf die Datenbank wird festgestellt, welche Funkkanäle frei bzw. wenig gestört sind, so dass ein freier bzw. wenig-gestörter Funkkanal für die Kommunikation verwendet werden kann.

Aus der Druckschrift US 5,974,328 Lee et al. "Rapid System Access and Registration in Mobile Phone Systems" ist ebenfalls ein datenbank-basiertes Verfahren zur ortsabhängigen Konfiguration eines mobilen Endgerätes bekannt. Dabei wird ein mobiles Endgerät ortsabhängig aus einer Datenbank heraus mit jeweils optimierten Anmelde-Parametern zur Anmeldung in einem Mobilfunknetz versorgt.

Bei den bekannten Verfahren und Einrichtungen zur Auswahl eines von mehreren Übertragungswegen hat sich als nachteilig erwiesen, dass der ausgewählte Übertragungsweg in vielen Fällen nicht die erforderliche Übertragungsqualität gewährleistet und/oder in vielen Fällen zwar ein qualitativ hochwertiger, dafür aber unnötig teurer Übertragungsweg ausgewählt wird. Es ist daher eine Aufgabe der vorliegenden Erfindung, beim Einsatz mobiler Kommunikationsgeräte die Auswahl eines jeweils verwendeten Übertragungsweges zu verbessern.

Die Aufgabe wird durch ein Verfahren gemäß des Patentanspruchs 1 und durch ein Kommunikationsgerät gemäß des Patentanspruchs 10 gelöst.

Die Lösung der Aufgabe sieht den Einsatz eines Verfahrens zur Auswahl eines Übertragungsweges für eine Kommunikationsverbindung eines mobiles Kommunikationsgerätes vor, wobei durch das mobile Kommunikationsgerät zumindest zwei Übertragungswege auswählbar sind. Dabei wird in einem ersten Schritt eine Angabe über den Standort des Kommunikationsgerätes ermittelt, in einem zweiten Schritt wird anhand der ermittelten Angabe auf eine Datenbank für Übertragungswege zugegriffen, in einem dritten Schritt wird anhand zumindest eines Eintrages der Datenbank ein bevorzugter Übertragungsweg bestimmt, und in einem vierten Schritt wird der bevorzugte Übertragungsweg ausgewählt und für eine Kommunikationsverbindung verwendet. Durch den Einsatz dieses Verfahrens ist eine standortabhängige Auswahl des Übertragungsweges möglich, wobei anhand des Eintrages in der Datenbank für verschiedene Standorte verschiedene bevorzugte Übertragungswege vorgegeben werden können. Dazu werden für die Datenbank statistische Angaben über vorangegangene Nutzungen zumindest eines der Übertragungswege verwendet, wobei zumindest ein Zusammenhang zwischen einer Angabe über den bei einer vorangegangenen Nutzung verwendeten Standort und einer bei der vorangegangenen Nutzung erfassten Angabe über die Qualität des verwendeten Übertragungsweges gespeichert und für die Auswahl des Übertragungsweges verwendet wird. Durch eine solche "Erfahrungsdatenbank" kann die Nutzung eines bestimmten Übertragungsweges an einem Standort, an dem dieser Übertragungsweg bekanntermaßen (erfahrungsgemäß) häufig gestört ist, unterbleiben.

zur Lösung der Aufgabe wird weiterhin ein Kommunikationsgerät zum drahtlosen Zugriff auf mehrere Übertragungswege vorgeschlagen, wobei für eine Kommunikationsverbindung einer der mehreren Übertragungswege auswählbar ist. Dabei ist das Kommunikationsgerät mit einer Positionserfassungseinrichtung zur Ermittlung einer Angabe über eine geographische Position des Kommunikationsgerätes ausgestattet, und das Kommunikationsgerät ist zum Zugriff auf eine Datenbank ausgerüstet, wobei die Datenbank zumindest einen Eintrag mit einer auf Erfahrungswerten aus vorangegangenen Kommunikationsverbindungen basierende Angabe über eine zu erwartende Qualität eines der Übertragungswege mit zumindest einer zugeordneten Angabe über einen Standort aufweist. Weiter ist das Kommunikationsgerät mit einer Auswahleinrichtung für einen der mehreren Übertragungswege ausgestattet, wobei die Auswahleinrichtung derart ausgebildet ist, dass mittels der Angabe über den Standort und des zumindest einen Datenbankeintrages ein einer minimalen Qualitätsanforderung entsprechender Übertragungsweg ausgewählt und verwendet wird. Mittels eines solchen Kommunikationsgerätes wird immer derjenige Übertragungsweg ausgewählt, der bezogen auf den Standort des Kommunikationsgerätes erfahrungsgemäß eine vorgegebene Mindest-Qualitätsanforderung erfüllt. Dadurch kann immer ein solcher Übertragungsweg ausgewählt werden, der zwar leistungsfähig genug ist, aber eine möglichst kostengünstige und/oder eine energiesparende Betriebsweise des Kommunikationsgerätes gestattet. Dazu sind vorteilhaft durch einen Benutzer verschiedene Kriterien als Ziele definierbar, beispielsweise Kostenkriterien, Energiekriterien, Zeitkriterien (Zeitdauer des Verbindungsaufbaus, Übertragungszeit für eine bestimmte Datenmenge, Delay-Zeiten etc.).

Vorteilhafte Ausgestaltungen des erfindungsgemäßen Verfahrens sind in den Patentansprüchen 2 bis 9 angegeben. Die dabei beschriebenen Merkmale und Vorteile gelten sinngemäß auch für das erfindungsgemäße Kommunikationsgerät.

Dabei kann die Datenbank in dem Kommunikationsgerät selbst gespeichert sein, wodurch der Zugriff auf die Datenbank besonders schnell und einfach ist, und wobei eine Manipulation der Datenbank durch Dritte einfach verhindert werden kann. Andererseits kann auch eine zentral in einem Kommunikationsnetzwerk verfügbare Datenbank für diesen Zweck verwendet werden, wodurch von einem Kommunikationsgerät auch die Erfahrungswerte und Regeln (Routing-Regeln) anderer Kommunikationsgeräte verwendet werden können. Schließlich ist auch der parallele Einsatz sowohl einer lokalen als auch einer zentralen Datenbank in vielen Fällen vorteilhaft, weil dadurch zum einen Redundanzanforderungen erfüllt werden, und zum anderen bevorzugt "eigene" Einträge verwendet werden können, um beim Nicht-Vorhandensein solcher "eigener" Einträge auf die zentral gespeicherten Einträge zurückgreifen zu können.

Die Struktur von Funknetzwerken und deren lokal unterschiedliche Empfangsgegebenheiten sowie die zeitlich variierende Auslastung von Übertragungswegen kann leicht berücksichtigt werden, indem nach einer Nutzung des ausgewählten Übertragungsweges eine dabei registrierte Qualität des Übertragungsweges und die Angabe über den Standort durch das Kommunikationsgerät für einen Neueintrag in der Datenbank und/oder für eine Korrektur eines vorhandenen Eintrages in der Datenbank verwendet wird. Als Qualität kann dabei vorteilhaft eine Zusammenstellung von Einzel-Kriterien gespeichert und berücksichtigt werden, z.B. Kosten, Bandbreiten, Zuverlässigkeiten (beispielsweise Anzahl von Verbindungsabbrüchen pro Zeiteinheit), Delay-Zeiten (beispielsweise bei VoIP-Verbindungen) etc..

Die durch die kontinuierliche und automatische "Pflege" der Einträge in der Datenbank gewonnenen Daten können vorteilhaft auch zur Optimierung eines Funknetzwerks, dem ein zugeordneter Übertragungsweg angehört, verwendet werden. Somit kann in vielen Fällen das separate Vermessen von Funkbereichen eingespart werden und dennoch ein stets aktuelle Überblick über Funkreichweiten, "Funklöcher", Feldstärkeverteilungen o.ä. gewonnen werden. Dabei können auch von zentraler Stelle aus (beispielsweise von einem System-Administrator) derartige Änderungen in den Datensätzen der Datenbank vorgenommen werden, dass zukünftige Auswahl-Entscheidungen beeinflusst werden. Damit kann die Auslastung einzelner Verbindungswege gesteuert werden und Engpässe vermieden werden.

Wenn für die Auswahl des Übertragungsweges eine Zeitangabe über die Uhrzeit und/oder Tageszeit und/oder eine Wochentags-Angabe verwendet wird, wobei der Datenbank statistische Angaben über die Qualität zumindest eines Übertragungsweges zu einer bestimmten Uhrzeit und/oder Tageszeit und/oder Wochentages entnommen werden, können auch zeitabhängig wiederkehrende Änderungen bei den Übertragungswegen.berücksichtigt werden. Beispielsweise werden damit solche Fälle berücksichtigt, in denen zu bestimmten Tageszeiten (beispielsweise zu üblichen Geschäftszeiten) bestimmte Übertragungswege (beispielsweise ein Firmen-WLAN) stark ausgelastet sind und daher eine verminderte Bandbreite anbieten.

Eine manuelle Eingabe einer Standortinformation in ein Kommunikationsgerät wird vermieden, wenn zur Ermittlung der Angabe über den Standort des Kommunikationsgerätes ein satellitengestützes Positionserfassungssystem (z.B. "GPS") und/oder ein Verfahren zur Positionsbestimmung anhand empfangener terrestrischer Funkbasisstationen (Feldstärke und/oder Laufzeitmessungen) verwendet wird.

Das erfindungsgemäße Verfahren kann besonders flexibel und häufig flächendeckend eingesetzt werden, wenn für den Übertragungsweg ein WLAN-Funknetzwerk, ein GSM-Mobilfunknetz und/oder ein UMTS-Sprachdatenfunknetzwerk ausgewählt wird. Durch den Zugriff auf diese weit verbreiteten Übertragungswege steht mit einer hohen Wahrscheinlichkeit immer einer oder sogar mehrere Übertragungswege zur Auswahl zur Verfügung.

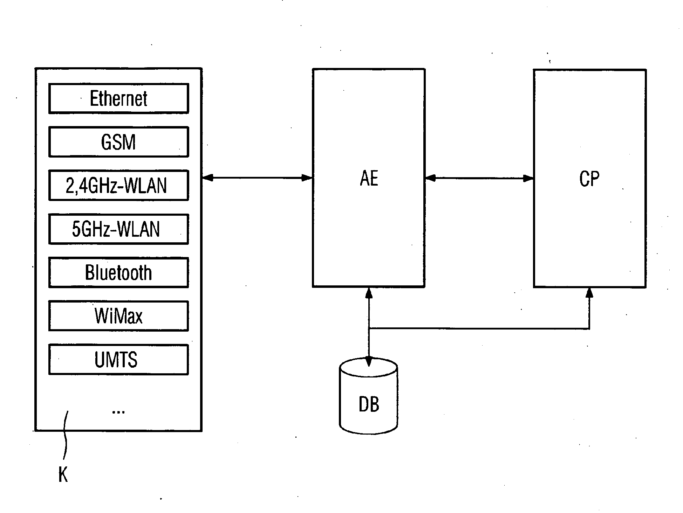

Ausführungsbeispiele des erfindungsgemäßen Verfahrens sind nachfolgend anhand der Zeichnung erläutert. Sie dienen gleichzeitig der Erläuterung eines erfindungsgemäßen Kommunikationsgerätes.

Dabei zeigt die einzige Figur in schematischer Darstellung eine Steuerungseinrichtung ("Call Processing"), eine Auswahl-Einrichtung und Zugriffseinheiten ("Konnektoren") eines Kommunikationsgerätes.

In der Figur sind in schematischer Darstellung Komponenten eines mobilen Kommunikationsgerätes gezeigt. Bei dem mobilen Kommunikationsgerät handelt es sich hier um ein sog. "Smart Phone", also ein Gerät, in welchem die Funktionen eines mobilen Computers ("PDA" - Personal Digital Assistent) und die Funktionen eines Mobilfunkgerätes (Mobiltelefon) miteinander kombiniert sind. Das Kommunikationsgerät ist multi-modal ausgeführt, verfügt also über Zugriffseinheiten K (Konnektoren) für verschiedene Funknetze, hier GSM, WLAN, Bluetooth, WiMax, UMTS, etc.. Zusätzlich verfügt das Kommunikationsgerät auch über Zugriffseinheiten K für drahtgebundene Kommunikation; in der Figur ist dafür exemplarisch eine Ethernet-Zugriffseinheit dargestellt.

Im Folgenden sei - sofern nicht anders beschrieben - vereinfacht angenommen, dass jede Zugriffseinheit K genau einem Übertragungsverfahren (GSM, Internet-Protokoll, ISDN...) zugeordnet ist, wodurch die Zugriffseinheiten K in der Figur gleichzeitig Übertragungsverfahren darstellen. Dabei kann mit einem Übertragungsverfahren auf mehrere Übertragungswege zugegriffen werden; beispielsweise mit einem einzigen GSM-Konnektor auf mehrere Mobilfunknetze (auch mit unterschiedlichen Netzbetreibern) und mit einem einzigen LAN-Anschluß auf unterschiedliche VoIP-Gateways/Gatekeeper o.ä.. Aus Gründen der weiteren Vereinfachung wird im Folgenden auch angenommen, dass jeder Zugriffseinheit K nicht nur genau ein Übertragungsverfahren, sondern auch genau ein Übertragungsweg zugeordnet ist, wodurch mit den Bezugszeichen der Zugriffseinheiten K gleichzeitig Übertragungsverfahren und schließlich Übertragungswege bezeichnet werden.

Das Kommunikationsgerät verfügt weiter über eine Steuerungseinrichtung CP ("Call Processing"), die den (nicht dargestellten) Anwendungen des Kommunikationsgerätes als Steuerungseinrichtung und als Schnittstelle für externe Kommunikation dient. Im vorliegenden Ausführungsbeispiel ist die Steuerungseinrichtung CP ein Call-Processing zur Vermittlung von Sprachverbindungen, wie es aus leitungsvermittelten Kommunikationsanlagen ("PBX") bekannt ist. Allgemein kann jedoch auch jede andere Steuerungseinrichtungg verwendet werden, beispielsweise VoIP-Gatekeeper, E-Mail-Verteileinrichtungen etc. oder auch multi-funktionale Steuerungseinrichtungen zur Vermittlung unterschiedlicher Datentypen und Kommunikationsströme.

Während in "herkömmlichen" mono-modalen Kommunikationsgeräten die Steuerungseinrichtung CP regelmäßig nur mit einer einzigen Zugriffseinheit K kommuniziert, greift im vorliegenden Ausführungsbeispiel die Steuerungseinrichtung CP mittels einer Auswahl-Einrichtung AE auf verschiedene Zugriffseinheiten K zu. Dazu ist die Steuerungseinrichtung CP derart ausgestaltet, dass diese zum Aufbau einer Kommunikationsverbindung oder eines Datenkanals an die Auswahl-Einrichtung AE nicht nur eine Kommunikationsadresse (Rufnummer, IP-Adresse o.ä.) übermittelt, sondern auch eine Angabe über eine Qualitäts-Anforderung.

Die Angabe über die Qualitäts-Anforderung umfasst im vorliegenden Ausführungsbeispiel mehrere Kriterien. Zum einen teilt die Steuerungseinrichtung CP der Auswahl-Einrichtung AE in einer internen Signalisierung in Abhängigkeit von der Anwendung, die die Kommunikationsverbindung (oder Datenkanal o.ä.) wünscht, einen Typ (Typ-Angabe) für die nächste gehende Kommunikationsverbindung mit. D.h., dass beispielsweise für Sprachverbindungen eine andere Signalisierung erfolgt als für die Übertragung einer E-Mail-Nachricht oder einer SMS-Nachricht. Bei Datenanwendungen (Internet-Zugriff o.ä.) kann außerdem eine automatisch ermittelte oder von einem Benutzer eingegebene gewünschte minimale Bandbreite (beispielsweise 128 kbit/s) angefordert werden.

Aus Sicht der Steuerungseinrichtung CP wirkt die Auswahl-Einrichtung AE wie eine - einzige - Zugriffseinheit K. Die Auswahl-Einrichtung AE "verdeckt" damit die Besonderheiten der einzelnen tatsächlich vorhandenen Zugriffseinheiten K. Daher ist es auch möglich und vorteilhaft, dass anstelle einer konkreten Kommunikationsadresse (Rufnummer, IP-Adresse) nur eine abstrakte Bezeichnung (z.B. der Name) des gewünschten Verbindungspartners von der Steuerungseinrichtung CP zu der Auswahl-Einrichtung AE übermittelt wird. Dann wird anhand des - später ausgewählten - Übertragungsweges und -verfahrens (und damit anhand der zu verwendenden Zugriffseinheit K) aus einem Adressverzeichnis (vorzugsweise ebenfalls in der Datenbank DB gespeichert) die "passende" Kommunikationsadresse abgerufen. Damit ist auch während einer laufenden Gesprächsverbindung ein Wechsel des Übertragungsweges und -verfahrens möglich, beispielsweise von einer VoIP-Verbindung (mit einer IP-Adresse als Kommunikationsadresse) zu einer ISDN-Verbindung (mit einer "klassischen" Rufnummer als Kommunikationsadresse).

Die Auswahl-Einrichtung AE und die Steuerungseinrichtung CP greifen auf eine gemeinsame Datenbank DB (Erfahrungsdatenbank) zu, wobei diese Datenbank DB im vorliegenden Ausführungsbeispiel in dem Kommunikationsgerät DB integriert ist. Alternativ oder zusätzlich ist selbstverständlich der Einsatz einer netzgestützten, zentralen Datenbank DB für die Nutzung durch mehrere Kommunikationsgeräte möglich.

In einer weiteren alternativen Ausgestaltung können auch unterschiedliche Kommunikationsgeräte wechselseitig auf die Datenbanken anderer Kommunikationsgeräte zugreifen und die darin enthaltenen Einträge für eine Auswahl einer Zugriffseinheit K und damit eines bestimmten Übertragungsweges verwenden.

Im Folgenden wird die Etablierung einer Kommunikationsverbindung durch ein Kommunikationsgerät mit den oben beschriebenen technischen Einrichtungen dargelegt. Dazu verfügt das Kommunikationsgerät über eine technische Einrichtung, eine Positionserfassungseinrichtung, die zumindest eine grobe geographische Positionserfassung des Kommunikationsgerätes gewährleistet. Im vorliegenden Ausführungsbeispiel werden dazu die Identifikationsnummern ("Base-Station-IDs") der verschiedenen Funkzellen erfasst, in deren Empfangsbereich das Kommunikationsgerät derzeit aktiv ist. Die Identifikationsnummern und die Empfangs-Feldstärken der jeweiligen Funkzellen werden durch die verschiedenen Zugriffseinheiten K in regelmäßigen Zeitabständen an die Auswahl-Einrichtung AE gemeldet. Aus den Angaben der verschiedenen Zugriffseinheiten K erstellt die Auswahl-Einrichtung AE ein aktuelles Standort-Profil. Alternativ ist auch eine Positionsbestimmung mittels eines satellitengestützten Systems, beispielsweise GPS, möglich. Schließlich ist in den Fällen, in denen eine aktuelle Positionsbestimmung nicht möglich ist, für verschiedene Tageszeiten (z. B. wochentags zwischen 12.00 und 16.00 Uhr: im Büro mit den Koordinaten xy) ein "Default-Standort" vorgebbar.

Bevorzugt wird - wie nachfolgend beschrieben - eine Routing-Entscheidung primär nach dem aktuellen Standort und sekundär nach weiteren Anforderungen getroffen. Alternativ kann jedoch auch primär nach Art des Benutzers oder der Nutzung (privat / geschäftlich etc.) unterschieden werden, oder es werden Kosten- oder Qualitätsmerkmale in den Vordergrund gestellt. Diese Einstellungen können nach einem Berechtigungsmodell entweder von Benutzern oder von einem Administrator beeinflusst werden.

Im Folgenden wird angenommen, dass eine Kommunikationsanwendung dazu verwendet werden soll, eine Video-Telephonie-Verbindung aufzubauen. Die damit beauftragte Anwendung übermittelt dazu an die Steuerungseinrichtung CP eine Anforderungsnachricht, die neben dem Typ der verlangten Kommunikationsverbindung (hier: "Real-Time-Stream") eine gewünschte Bandbreite (hier: 192 kbit/s Vollduplex) und eine zugeordnete Qualitätsklasse (hier: beste Qualität = möglichst keine Verbindungsabbrüche und geringer "Delay") übermittelt. Aufgrund der gegebenen Anforderungen entscheidet die Auswahl-Einrichtung AE, dass für die geforderte Kommunikationsverbindung nur bestimmte der verfügbaren Übertragungswege und damit bestimmte Zugriffseinheiten K in Frage kommen, nämlich Ethernet, WLAN, WiMax und UMTS. Um diese Entscheidung zu treffen, lädt die Auswahl-Einrichtung AE aus der Datenbank DB zumindest einmalig für jede verfügbare Zugriffseinheit K einen Datensatz, der die prinzipielle Leistungsfähigkeit der entsprechenden Zugriffseinheit K und des damit verknüpften Übertragungsweges am derzeitigen Standort beschreibt.

Durch die Auswahl-Einrichtung AE wird nun die derzeitige Verfügbarkeit der zuvor ausgewählten Zugriffseinheiten K und damit der damit ausgewählten Übertragungswege ermittelt. Dabei wird festgestellt, dass die Zugriffseinheit "Ethernet" derzeit nicht verfügbar ist, also kein Ethernet-Netzwerkanschluss angeschlossen bzw. aktiv ist.

Von den verbleibenden Zugriffseinheiten K sind die beiden WLAN-Zugriffseinheiten (2,4 GHz; 5 GHz), der WiMax-Übertragungsweg und das UMTS-Funkmodul geeignet, die mit der Anforderungsnachricht übermittelten Anforderungen zu erfüllen.

Die Auswahl-Einrichtung AE greift deshalb nochmals auf die Datenbank DB zu und lädt für die geeigneten Zugriffseinheiten K jeweils eine Kosten-Tabelle, um situationsbezogen den preisgünstigsten Übertragungsweg und damit die am besten geeignete Zugriffseinheit K auszuwählen. Dabei kann optional auch der günstigste "Provider" ausgewählt werden, wenn über eine Zugriffseinheit K und damit über ein Übertragungsverfahren mehrere Provider (Dienste-Anbieter) und damit mehrere Übertragungswege verfügbar sind (beispielsweise mehrere GSM-Netze zur Verfügung stehen).

Nachdem sich die Auswahl-Einrichtung AE für die Nutzung einer bestimmten Zugriffseinheit K entschieden hat (hier wird das kostengünstige 2,4 GHz-WLAN genutzt), wird die gewünschte Verbindung aufgebaut und die Auswahl-Einrichtung erteilt der Steuerungseinrichtung CP einen sog. "Qualitätsüberwachungs-Auftrag". Aufgrund des "Qualitätsüberwachungs--Auftrages" übermittelt die Steuerungseinrichtung CP nach Beendigung der zuvor aufgebauten Kommunikationsverbindung eine Qualitäts-Nachricht, ein sog. "Feedback", welches auch als "QoS-Data-Collection (QDC)" bekannt ist ("QoS" = Quality-of-Service). Mit dieser Qualitäts-Nachricht empfängt die Auswahl-Einrichtung AE Angaben über möglicherweise vorgekommene Verbindungsabbrüche, die durchschnittliche, minimale und maximale Übertragungsbandbreite und, sofern verfügbar, Angaben über die angefallenen Kosten. Zusammen mit der bereits vorliegenden Angabe über den aktuellen Standort verwendet die Auswahl-Einrichtung AE diese Daten zur Aktualisierung der Datenbank DB, wobei zunächst ein neuer Datensatz erstellt wird. Bei bereits vorliegenden Erfahrungswerten über den Standort und über den verwendeten Übertragungsweg kann alternativ oder zusätzlich ein vorhandener Datensatz aktualisiert werden. Bei der Aktualisierung vorhandener Datensätze sorgt ein Filteralgorithmus dafür, dass "Ausreißer", beispielsweise ein einzelner Verbindungsabbruch, nicht dazu führt, dass nachhaltig der betroffene Übertragungsweg nicht mehr ausgewählt wird. Gleichzeitig sorgt der Filteralgorithmus dafür, dass "jüngere" Qualitätsangaben stärker gewichtet werden als länger zurückliegende Angaben; dies betrifft vor allem auch Kosten-Angaben, weil Provider häufig die Kosten für ihre Dienstleistungen ändern. Mittels statistischer Verfahren können also mehrere Datensätze zusammengefasst werden.

Die Datenbank DB besitzt hier eine optionale Schnittstelle zü einem Netzwerk-Management-System (nicht dargestellt). Solche Netzwerk-Management-Systeme erlauben es, einen Überblick über datentechnische Infrastrukturen zu gewinnen und dienen dabei der Fehlersuche und der Netzplanung. Die bei der Nutzung von Kommunikationsverbindungen und damit bei der Nutzung von Übertragungswegen "automatisch" ermittelten QoS-Angaben werden - wie beschrieben - zur ständigen Aktualisierung der Datenbank DB verwendet, so dass die in der Datenbank DB vorliegenden Informationen zum Ersatz für aufwendige separate Netzmessungen verwendet werden können.

Gerade bei Konfigurationen, in denen sowohl lokale als auch zentrale Datenbanken eingesetzt werden, kann durch einen regelmäßigen Abgleich der lokalen Datenbanken mit der zentralen Datenbank ein zentraler Datenbestand aufgebaut und gepflegt werden, der durch gezielte Auswertung Infrastrukturmängel erkennbar macht. Durch Änderungen der Einträge in den Datenbanken, beispielsweise.durch einen Administrator, können dann Kommunikationsgeräte in ihrem "Verhalten" beeinflusst werden, beispielsweise, damit wenig ausgelastete Verbindungswege bevorzugt werden. Durch den beschriebenen Abgleich reicht dann auch beim Einsatz lokaler Datenbanken ein Eintrag an einer zentralen Stelle, also in der zentralen Datenbank.

## Patentansprüche

1. Verfahren zur Auswahl eines Übertragungsweges (K) für eine Kommunikationsverbindung eines mobiles Kommunikationsgerätes,
wobei durch das mobile Kommunikationsgerät zumindest zwei Übertragungswege (K) auswählbar sind,
wobei
- in einem ersten Schritt eine Angabe über den Standort des Kommunikationsgerätes ermittelt wird,
- in einem zweiten Schritt anhand der ermittelten Angabe auf eine Datenbank (DB) für Übertragungswege (K) zugegriffen wird,
- in einem dritten Schritt anhand zumindest eines Eintrages der Datenbank (DB) ein bevorzugter Übertragungsweg (K) bestimmt wird, und
in einem vierten Schritt der bevorzugte Übertragungsweg (K) ausgewählt und für eine Kommunikationsverbindung verwendet wird,
**dadurch gekennzeichnet, dass**
- in dem zweiten Schritt auf in der Datenbank (DB) gespeicherte statistische Angaben über vorangegangene Nutzungen zumindest eines der Übertragungswege (K) zugegriffen wird, wobei zumindest ein Zusammenhang zwischen einer Angabe über den bei der vorangegangenen Nutzung verwendeten Standort und einer bei der vorangegangenen Nutzung erfassten Angabe über die Qualität des verwendeten Übertragungsweges (K) gespeichert und für die Bestimmung des bevorzugten Übertragungsweges (K) verwendet wird.

2. Verfahren nach Patentanspruch 1,
**dadurch gekennzeichnet, dass**
in dem zweiten Schritt als die Datenbank (DB) eine in dem Kommunikationsgerät gespeicherte Datenbank (DB) verwendet wird.

3. Verfahren nach einem der vorhergehenden Patentansprüche,
**dadurch gekennzeichnet, dass**
in dem zweiten Schritt als die Datenbank (DB) eine zentral in einem Kommunikationsnetzwerk verfügbare und von mehreren Kommunikationsgeräten nutzbare Datenbank (DB) verwendet wird.

4. Verfahren nach einem der vorhergehenden Patentansprüche,
**dadurch gekennzeichnet, dass**
nach einer Nutzung des ausgewählten Übertragungsweges (K) eine dabei registrierte Qualität des Übertragungsweges (K) und die Angabe über den Standort durch das Kommunikationsgerät ein Neueintrag in der Datenbank (DB) oder eine Korrektur eines vorhandenen Eintrages in der Datenbank (DB) vorgenommen wird.

5. Verfahren nach Patentanspruch 4,
**dadurch gekennzeichnet, dass**
der Neueintrag oder der korrigierte Eintrag zur Optimierung eines Funknetzwerkes mit dem diesem Eintrag zugeordneten Übertragungsweg (K) verwendet wird.

6. Verfahren nach einem der vorhergehenden Patentansprüche,
**dadurch gekennzeichnet, dass**
für die Auswahl des Übertragungsweges (K) eine Zeitangabe über die Uhrzeit und/oder Tageszeit und/oder eine Wochentags-Angabe verwendet wird, wobei der Datenbank (DB) statistische Angaben über die Qualität zumindest eines Übertragungsweges (K) zu einer bestimmten Uhrzeit und/oder Tageszeit und/oder Wochentages entnommen werden.

7. Verfahren nach einem der vorhergehenden Patentansprüche,
**dadurch gekennzeichnet, dass**
zur Ermittlung der Angabe über den Standort des Kommunikationsgerätes ein satellitengestütztes Positionserfassungssystem und/oder ein Verfahren zur Positionsbestimmung anhand empfangener terrestrischer Funkbasisstationen verwendet wird.

8. Verfahren nach einem der vorhergehenden Patentansprüche,
**dadurch gekennzeichnet, dass**
für den Übertragungsweg (K) ein WLAN-Funknetzwerk (2,4 GHz-WLAN, 5 GHz WLAN), ein GSM-Mobilfunknetz (GSM) und/oder ein UMTS-Sprachdatenfunknetzwerk (UMTS) ausgewählt wird.

9. Verfahren nach einem der vorhergehenden Patentansprüche,
**dadurch gekennzeichnet, dass**
für eine geplante Kommunikationsverbindung eine Mindest-Anforderung für die Qualität eines auszuwählenden Übertragungsweges (K) definiert wird, wobei anhand der Datenbankeinträge nur ein solcher Übertragungsweg (K) ausgewählt wird, bei welchem die Erfüllung der definierten Qualitätsanforderungen zu erwarten ist.

10. Kommunikationsgerät zum drahtlosen Zugriff auf mehrere Übertragungswege (K), wobei für eine Kommunikationsverbindung einer der mehreren Übertragungswege (K) auswählbar ist,
**dadurch gekennzeichnet, dass**
das Kommunikationsgerät mit einer Positionserfassungseinrichtung zur Ermittlung einer Angabe über eine geographische Position des Kommunikationsgerätes ausgestattet ist,
dass das Kommunikationsgerät zum Zugriff auf eine Datenbank (DB) ausgerüstet ist, wobei die Datenbank zumindest einen Eintrag mit einer auf Erfahrungswerten aus vergangenen Kommunikationsverbindungen basierende statistische Angabe über eine zu erwartende Qualität eines der Übertragungswege (K) mit zumindest einer zugeordneten Angabe über einen Standort aufweist,
dass das Kommunikationsgerät mit einer Auswahl-Einrichtung (AE) für einen der mehreren Übertragungswege (K) ausgestattet ist, wobei die Auswahl-Einrichtung (AE) derart ausgebildet ist, dass mittels der Angabe über den Standort und des zumindest einen Datenbankeintrages ein einer minimalen Qualitätsanforderung entsprechender Übertragungsweg (K) ausgewählt und verwendet wird.

## Claims

1. Method for selecting a transmission path (K) for a communication link of a mobile communication device,
wherein at least two transmission paths (K) can be selected by the mobile communication device,
wherein
- in a first step, information concerning the location of the communication device is determined
- in a second step, based on the information determined, a database (DB) for transmission paths (K) is accessed,
- in a third step, based on at least one entry in the database (DB), a preferred transmission path (K) is determined and,
- in a fourth step, the preferred transmission path (K) is selected and used for a communication link,
**characterised in that**
- in the second step, statistical information stored in the database (DB) concerning previous use of at least one of the transmission paths (K) is accessed, wherein at least one association between an item of information concerning the location utilised during the previous use and an item of information gathered during the previous use concerning the quality of the transmission path (K) utilised is stored and is used for determining the preferred transmission path (K).

2. Method according to claim 1, **characterised in that** in the second step a database (DB) stored in the communication device is used as the database (DB).

3. Method according to one of the preceding claims, **characterised in that** in the second step, a database (DB) which is centrally available in a communication network and can be utilised by a plurality of communication devices is used ras the database (DB).

4. Method according to one of the preceding claims, **characterised in that** after use of the selected transmission path (K), a quality of the transmission path (K) which is registered during the process and information from the communication device concerning the location, a new entry can be made in the database (DB) or a correction of an existing entry in the database (DB) can be made.

5. Method according to claim 4, **characterised in that** the new entry or the corrected entry is used for optimising a radio network with the transmission path (K) associated with this entry.

6. Method according to one of the preceding claims, **characterised in that** for selection of the transmission path (K), time information on the time, and/or part of the dray and/or day of the week is used, wherein statistical information on the quality of at least one transmission path (K) at a particular time and/or part of the day and/or day of the week is taken from the database.

7. Method according to one of the preceding claims, **characterised in that** a satellite-based position-detecting system and/or a method for position-determination based on received terrestrial radio base stations is used for determining the information concerning the location of the communication device.

8. Method according to one of the preceding claims, **characterised in that** a WLAN radio network (2.4 GHz WLAN, 5 GHz WLAN), a GSM mobile radio network (GSM) and/or a UMTS speech data radio network (UMTS) is selected for the transmission path (K).

9. Method according to one of the preceding claims, **characterised in that** a minimum requirement for the quality of a transmission path (K) to be selected is defined for a planned communication link wherein, based on the database entries, only a transmission path (K) which can be expected to fulfil the defined quality requirements is selected.

10. Communication device for wireless access to a plurality of transmission paths (K), wherein for a communication link, one of the plurality of transmission paths (K) can be selected, **characterised in that**
the communication device is equipped with a position-detecting apparatus for determining an item of information concerning a geographical position of the communication device,
that the communication device is equipped for access to a database (DB), wherein the database comprises at least one entry with an item of statistical information based on experience values from previous communication links, concerning an expected quality of one of the transmission paths (K) with at least one associated item of information concerning a location,
that the communication device is equipped with a selecting apparatus (AE) for one of the plurality of transmission paths (K), wherein the selecting apparatus (AE) is configured so that by means of the information concerning the location and the at least one database entry, a transmission path (K) which meets a minimum quality requirement is selected and used.

## Revendications

1. Procédé pour sélectionner une voie de transmission (K) pour une liaison de communication d'un appareil de communication mobile,
sachant que l'appareil de communication permet de sélectionner au moins deux voies de transmission (K), sachant que
- dans une première étape, il est déterminé une indication sur la position de l'appareil de communication,
- dans une deuxième étape, il est fait accès à l'aide de l'indication déterminée à une banque de données (DB) pour des voies de transmission (K),
- dans une troisième étape, il est défini une voie de transmission (K) préférentielle à l'aide d'au moins un enregistrement de la banque de données (DB), et
- dans une quatrième étape, la voie de transmission (K) préférentielle est sélectionnée et employée pour une liaison de communication,
**caractérisé en ce que**
- au cours de la deuxième étape, il est fait accès à des indications statistiques enregistrées dans la banque de données (DB) relatives à des utilisations précédentes d'au moins une des voies de transmission (K), sachant qu'au moins une relation entre une indication sur la position employée lors de l'utilisation précédente et une indication saisie lors de l'utilisation précédente sur la qualité de la voie de transmission (K) employée est enregistrée et qu'elle est employée pour définir la voie de transmission (K) préférentielle.

2. Procédé selon la revendication 1, **caractérisé en ce que**
la banque de données (DB) employée au cours de la deuxième étape est une banque de données (DB) enregistrée dans l'appareil de communication.

3. Procédé selon l'une quelconque des revendications précédentes, **caractérisé en ce que**
la banque de données (DB) employée au cours de la deuxième étape est une banque de données (DB) disponible de manière centralisée dans un réseau de communications et utilisable par plusieurs appareils de communication.

4. Procédé selon l'une quelconque des revendications précédentes, **caractérisé en ce que**,
après une utilisation de la voie de transmission (K) sélectionnée, une qualité de la voie de transmission (K) enregistrée à cette occasion et l'indication sur la position sont employées par l'appareil de communication pour réaliser un nouvel enregistrement dans la banque de données (DB) ou une correction d'un enregistrement présent dans la banque de données (DB).

5. Procédé selon la revendication 4, **caractérisé en ce que**
le nouvel enregistrement ou l'enregistrement corrigé est employé pour optimiser un réseau de radiocommunications avec la voie de transmission (K) associée à cet enregistrement.

6. Procédé selon l'une quelconque des revendications précédentes, **caractérisé en ce que**,
pour la sélection de la voie de transmission (K), on emploie une indication de temps relative à l'heure et/ou à un moment de la journée et/ou à une indication du jour de la semaine, sachant que des indications statistiques sur la qualité d'au moins une voie de transmission (K) sont prélevées dans la banque de données (DB) à une certaine heure et/ou un certain moment de la journée et/ou un certain jour de la semaine.

7. Procédé selon l'une quelconque des revendications précédentes, **caractérisé en ce que**,
pour déterminer l'indication sur la position de l'appareil de communication, on emploie un système de détection de position assisté par satellite et/ou un procédé de détermination de position à l'aide de stations de base radio terrestres réceptrices.

8. Procédé selon l'une quelconque des revendications précédentes, **caractérisé en ce que**,
pour la voie de transmission (K), on sélectionne un réseau local sans fil (WLAN à 2,4 GHz, WLAN à 5 GHz), un réseau de radiocommunications mobiles GSM (GSM) et/ou un réseau de radiocommunications de données vocales UMTS (UMTS).

9. Procédé selon l'une quelconque des revendications précédentes, **caractérisé en ce que**,
pour une liaison de communication planifiée, on définit une exigence minimale pour la qualité d'une voie de transmission (K) à sélectionner, sachant que, à l'aide des enregistrements de la banque de données, on sélectionne uniquement une voie de transmission (K) pour laquelle on s'attend à ce que les exigences de qualité définies soient satisfaites.

10. Appareil de communication permettant un accès sans fil à plusieurs voies de transmission (K), sachant qu'une desdites voies de transmission (K) peut être sélectionnée pour une liaison de communication, **caractérisé**
**en ce que** l'appareil de communication est équipé d'un dispositif de détection de position destiné à déterminer une indication sur la position géographique de l'appareil de communication,
**en ce que** l'appareil de communication est équipé pour faire des accès à une banque de données (DB), sachant que la banque de données comporte au moins un enregistrement ayant une indication statistique basée sur des valeurs empiriques provenant d'anciennes liaisons de communication et relative à une qualité attendue de la voie de transmission (K) avec au moins une indication associée relative à une position,
**en ce que** l'appareil de communication est équipé d'un dispositif de sélection (AE) pour une desdites voies de transmission (K), le dispositif de sélection (AE) étant conçu de manière telle qu'une voie de transmission (K) correspondant à une exigence de qualité minimale soit sélectionnée et employée au moyen de l'indication sur la position et du ou des enregistrements de la banque de données.
